# FASCICULE DE BREVET EUROPEEN

(11) **EP 3 883 854 B1**
(45) Date de publication et mention de la délivrance du brevet: **07.06.2023**
(21) Numéro de dépôt: 19806201.0
(22) Date de dépôt: 19.11.2019
(51) Int. Cl.: B64D 35/04, B64D 27/10

(54) **SYSTÈME DE PROPULSION D'UN AÉRONEF ET PROCÉDÉ DE FONCTIONNEMENT D'UN TEL SYSTÈME**
ANTRIEBSSYSTEM EINES FLUGZEUGS UND VERFAHREN ZUM BETREIBEN EINES SOLCHEN SYSTEMS
PROPULSION SYSTEM FOR AN AIRCRAFT AND FUNCTIONING METHOD OF SUCH A SYSTEM

(30) Priorité: 22.11.2018 FR 1871723
(43) Date de publication de la demande: 29.09.2021
(73) Titulaire: SAFRAN AIRCRAFT ENGINES, 75015 Paris (FR)
(72) Inventeur: PARMENTIER, Nicolas Claude, 77550 MOISSY-CRAMAYEL (FR); MISSOUT, Marc, 77550 MOISSY-CRAMAYEL (FR)
(74) Mandataire: Argyma
(86) Numéro de dépôt international: PCT/EP2019/081809
(87) Numéro de publication internationale: WO 2020/104460

(56) Documents cités:
- US-A1- 2006 011 780
- US-A1- 2016 176 534
- US-A1- 2016 355 272

## Description

### DOMAINE TECHNIQUE ET OBJET DE L'INVENTION

La présente invention concerne le domaine des aéronefs et, plus particulièrement, un système de propulsion d'un avion.

### ETAT DE LA TECHNIQUE

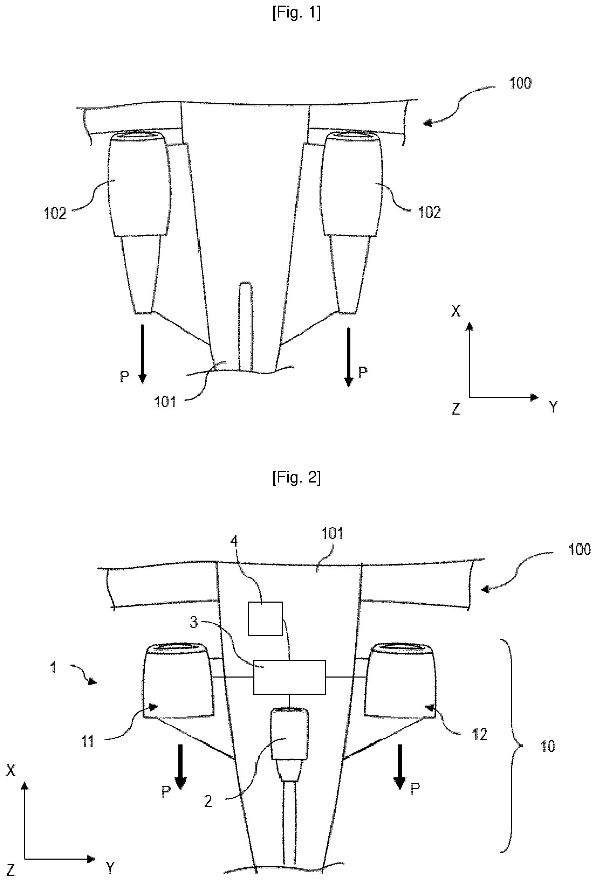

Dans ce document, en référence à la figure 1, un avion 100 s'étend longitudinalement selon un axe X, latéralement selon un axe Y et verticalement selon un axe Z de manière à former un repère orthogonal (X, Y, Z). De plus, dans un tel repère, l'avant et l'arrière sont définis selon l'axe X en référence au déplacement de l'avion 100 en vol. Autrement dit, l'avant et l'arrière de l'avion 100 sont définis selon l'axe X sur la figure 1 qui est orienté de l'arrière vers l'avant. De manière connue, l'avion 100 comprend un corps principal 101, connu sous la désignation de « fuselage », s'étendant selon l'axe de l'avion 100 et deux ailes latérales (non représentées).

De manière connue, afin de permettre le déplacement de l'avion 100, celui-ci comprend un système de propulsion configuré pour générer une poussée P dans le sens inverse du déplacement de l'avion 100, de manière à propulser ce dernier vers l'avant. Comme illustré à la figure 1, un tel système de propulsion comprend, de manière connue, deux turbomoteurs 102, positionnés généralement de part et d'autre du corps principal 101 de l'avion 100. Comme cela est connu, un turbomoteur est un moteur à combustion configuré pour entraîner en rotation un organe propulsif tournant au moyen d'un flux d'air ingéré par le moteur. Parmi les turbomoteurs, il est connu des turboréacteurs, équipés d'un carter de guidage de l'air, et des turbopropulseurs, qui en sont dénués. Pour un turboréacteur, l'organe propulsif tournant est désigné soufflante tandis que pour un turbopropulseur l'organe propulsif tournant est désigné hélice.

Aussi, afin de permettre la poussée de l'avion, un turboréacteur est configuré pour produire une accélération de l'air entre l'entrée et la sortie du turboréacteur. Pour cela, de manière connue, le turboréacteur, qui sera désigné plus généralement par la suite par le terme « moteur », comprend un carter de guidage dans lequel sont montés une soufflante, et un générateur de gaz pour entraîner la soufflante.

Le générateur de gaz comprend au moins un compresseur, configuré pour comprimer un flux d'air entrant de manière à générer en sortie un air présentant une vitesse, une pression et une température élevées. Le générateur de gaz comprend en outre une chambre de combustion permettant la combustion d'un flux d'air comprimé avec du carburant pour générer une quantité importante d'énergie. Enfin, le générateur de gaz comporte au moins une turbine configurée pour récupérer l'énergie issue de la chambre de combustion afin d'entraîner le compresseur et la soufflante. Le flux d'air généré par la soufflante génère une poussée permettant la propulsion de l'avion vers l'avant.

De manière connue, le générateur de gaz est logé dans le carter de guidage de l'air, qui présente des dimensions adaptées à la masse de l'avion, de manière à ne pas pénaliser les performances de l'avion lorsque celui-ci est en vol.

Dans le cas d'un avion de petites dimensions, du fait de sa faible masse, le moteur présente des dimensions réduites, ce qui présente l'inconvénient de nécessiter l'intégration d'un compresseur de faibles dimensions, dont le taux de compression et la température des gaz en sortie du compresseur sont limités. De telles limitations ne permettent pas toujours un rendement optimal du moteur.

Pour éliminer ces inconvénients, il est connu des avions de petites dimensions comprenant un unique moteur fixé directement au fuselage, généralement sur le dessus de l'avion. Une telle configuration, désignée architecture monomoteur, permet l'installation d'un compresseur proportionnellement plus important par rapport aux dimensions du fuselage. Cependant, une telle architecture n'est envisageable que sur certains types d'avions, puisqu'elle nécessite l'installation d'un moteur présentant des dimensions offrant de bonnes conditions aérodynamiques.

L'invention a donc pour but de remédier au moins en partie à ces inconvénients en proposant un système de propulsion simple et efficace, pouvant être intégré sur des avions de petites dimensions, tout en assurant une poussée optimale.

De manière incidente, on connait un système de propulsion décrit dans le document US20160355272A1, comprenant deux ensembles propulsifs, positionnés de part et d'autre du fuselage de l'avion. Chaque ensemble propulsif comprend un générateur de gaz configuré pour entraîner plusieurs soufflantes et pour emmagasiner de l'énergie électrique. Le système de propulsion comprend en outre un commutateur permettant de transférer l'énergie électrique emmagasinée entre les deux ensembles propulsifs. Du fait de son encombrement, de tels ensembles propulsifs ne peuvent être montés que sur des avions de grandes dimensions.

De manière incidente encore, on connait un système de propulsion décrit dans le document EP3190052A1, comprenant un générateur de gaz et une soufflante de manière à assurer la propulsion de l'avion en vol. Le système comprend en outre un dispositif électrique, relié à la soufflante, comprenant un module de stockage configuré pour emmagasiner l'énergie lorsque le générateur de gaz est en fonctionnement. Le dispositif électrique est alors configuré pour alimenter la soufflante en énergie pendant les opérations de roulage, de manière à limiter l'utilisation du générateur de gaz. Cependant, le système de propulsion décrit dans le document EP3190052A1 ne permet pas de résoudre la problématique liée aux moteurs montés sur des avions de faibles dimensions.

De manière incidente, on connaît par la demande de brevet US2006/011780A1 un système de propulsion en pointe arrière, ayant une architecture de propulsion mécanique, qui ne comporte aucune redondance propulsive. Dans un autre domaine, on connaît également par la demande de brevet US2016/176534A1 une architecture de propulsion électrique, c'est-à-dire pour fournir une alimentation électrique et non mécanique via des arbres, comportant une redondance électrique.

### PRESENTATION GENERALE DE L'INVENTION

A cet effet, l'invention concerne un système de propulsion destiné à être monté sur un aéronef comprenant un corps principal, ledit système de propulsion comprenant :
- un premier organe propulsif tournant et un deuxième organe propulsif tournant, destinés à être montés de part et d'autre dudit corps principal,
- un boîtier de transmission, relié au premier organe propulsif tournant via un premier arbre mécanique et au deuxième organe propulsif tournant via un deuxième arbre mécanique,
- un unique générateur de gaz comprenant un compresseur, une chambre de combustion et une turbine, le générateur de gaz étant relié audit boîtier de transmission afin d'entraîner le premier organe propulsif tournant et le deuxième organe propulsif tournant en rotation, et
- une unique turbomachine auxiliaire, configurée pour entraîner le premier organe propulsif tournant et le deuxième organe propulsif tournant en rotation indépendamment du générateur de gaz.

Un tel système de propulsion permet avantageusement la dissociation des organes propulsifs tournants et du générateur de gaz, permettant l'installation d'un générateur de gaz unique pouvant ainsi être installé en une position différente des organes propulsifs tournants sur le fuselage de l'avion, ce qui réduit son impact aérodynamique. De plus, le générateur de gaz présente avantageusement des dimensions plus importantes et donc une efficacité plus importante, étant donné qu'il est indépendant des organes propulsifs tournants. Par le terme « organe propulsif tournant », on entend une hélice ou une soufflante ne comprenant pas de générateur de gaz directement associé à l'organe propulsif tournant. Selon l'invention, un tel générateur de gaz est déporté par rapport aux organes propulsifs tournants. En dissociant le générateur de gaz de l'organe propulsif tournant, on s'affranchit des contraintes liées au taux de compression du générateur de gaz, puisque l'organe propulsif tournant seul dans un carter permet de déplacer un plus grand volume d'air, permettant une poussée plus importante.

Le système de propulsion selon l'invention présente également l'avantage de pouvoir être installé sur des avions de faibles dimensions. L'installation d'un générateur de gaz de dimensions plus importantes permet d'obtenir un taux de compression ainsi qu'une température en entrée de la chambre de combustion plus élevés, permettant une meilleure efficacité.

En outre, un tel système de propulsion permet avantageusement l'utilisation d'organes propulsifs tournants présentant des dimensions réduites, permettant de limiter les pénalités aérodynamiques en vol, dues à des équipements encombrants, notamment à l'installation de carters trop volumineux.

Selon une forme de réalisation de l'invention, le premier organe propulsif tournant étant caractérisé par un premier sens de rotation et le deuxième organe propulsif tournant étant caractérisé par un deuxième sens de rotation, le premier organe propulsif tournant et le deuxième organe propulsif tournant sont configurés pour tourner suivant des sens de rotation identiques.

Une telle configuration permet avantageusement l'utilisation de deux organes propulsifs tournants de même type pouvant être fabriqués de manière similaire et ne nécessitant pas d'être positionnés dans un carter particulier sur l'aéronef, permettant un gain de temps lors du montage du système de propulsion sur l'aéronef.

De manière alternative, le premier organe propulsif tournant étant caractérisé par un premier sens de rotation et le deuxième organe propulsif tournant étant caractérisé par un deuxième sens de rotation, le premier organe propulsif tournant et le deuxième organe propulsif tournant sont configurés pour tourner suivant des sens de rotation opposés.

Une telle configuration alternative permet avantageusement de limiter la pénalisation aérodynamique due à un flux d'air extérieur appliqué sur l'aéronef en vol en optimisant la symétrie de l'écoulement d'un tel flux d'air extérieur sur le corps principal de l'aéronef. Le sens de rotation de chaque organe propulsif tournant est configuré pour être avantageusement choisi de manière à limiter la distorsion du flux d'air entrant dans le carter ou le bruit perçu depuis l'intérieur de l'aéronef.

De préférence, chaque organe propulsif tournant est configuré pour fournir une poussée comprise entre 1000lbf (4448N) et 8000lbf (35584N), de préférence, comprise entre 1000lbf (4448N) et 7000lbf (31136N)... Une telle poussée est adaptée pour un avion de petites dimensions. Dans le cas d'une hélice, la puissance mécanique est comprise entre 2*400 kW (2*536shp) et 2*2500 kW (2*3621shp).

De préférence, le boîtier de transmission est relié au premier organe propulsif tournant par le premier arbre mécanique et au deuxième organe propulsif tournant par le deuxième arbre mécanique, permettant avantageusement de relier les deux organes propulsifs tournants à un unique générateur de gaz, ce qui présente l'avantage de permettre l'entraînement des deux organes propulsifs tournants simultanément à une même vitesse de rotation.

Selon un autre aspect de l'invention, le premier arbre mécanique et le deuxième arbre mécanique forment un unique arbre mécanique configuré pour relier le premier organe propulsif tournant, le deuxième organe propulsif tournant et le boîtier de transmission.

Selon une forme de réalisation de l'invention, le système de propulsion comprend un module d'embrayage configuré pour relier mécaniquement la turbomachine auxiliaire au boîtier de transmission. Un tel module d'embrayage permet avantageusement de connecter ou déconnecter la turbomachine auxiliaire du boîtier de transmission, permettant de basculer entre la turbomachine auxiliaire et le générateur de gaz, de manière à entraîner la rotation des organes propulsifs tournants par l'une ou l'autre des sources d'énergie.

De manière alternative, le système de propulsion comprend au moins un générateur électrique, relié à la turbomachine auxiliaire, et au moins un moteur électrique, alimenté par le générateur électrique et configuré pour entraîner le premier organe propulsif tournant et le deuxième organe propulsif tournant en rotation. Une telle configuration permet avantageusement de limiter la dissipation d'énergie dans les différents modules mécaniques. En outre, cela permet de faciliter le positionnement de la turbomachine auxiliaire et du générateur électrique, celui-ci étant relié de manière pratique au moteur électrique par un câble électrique.

De manière préférée, le système de propulsion comprend une batterie de stockage électrique configurée pour être alimentée par le générateur électrique afin de permettre d'alimenter le moteur électrique sans que la turbomachine auxiliaire ou que le générateur de gaz soit en fonctionnement, par exemple pendant les opérations de roulage au sol.

Dans une première configuration, le moteur électrique est relié directement au boîtier de transmission pour l'entraîner directement. Une telle configuration permet avantageusement de remplacer par exemple la turbomachine auxiliaire si celle-ci devait présenter des capacités réduites ou même en cas de nécessité de compléter l'énergie apportée par la turbomachine auxiliaire ou par le générateur de gaz.

Dans une configuration alternative, le premier arbre mécanique et le deuxième arbre mécanique formant un unique arbre mécanique, ledit moteur électrique est relié directement audit unique arbre mécanique pour l'entraîner directement. Une telle configuration permet avantageusement de limiter les pertes énergétiques dans le boîtier de transmission, tout en permettant l'entraînement des deux organes propulsifs tournants par un unique moteur électrique en cas de montage d'un unique arbre mécanique.

Dans une autre configuration alternative, le premier arbre mécanique et le deuxième arbre mécanique étant indépendants, le système de propulsion comprend un premier moteur électrique, monté sur le premier arbre mécanique pour l'entraîner directement, et un deuxième moteur électrique, monté sur le deuxième arbre mécanique pour l'entraîner directement. Deux moteurs électriques permettent avantageusement de limiter les pertes de puissance via le boîtier de transmission lorsque le système de propulsion comprend deux arbres mécaniques distincts.

Selon une forme de réalisation alternative de l'invention, le système de propulsion comprend un premier moteur électrique monté directement sur le premier organe propulsif tournant pour l'entraîner directement et un deuxième moteur électrique monté directement sur le deuxième organe propulsif tournant pour l'entraîner directement. Une telle forme de réalisation permet avantageusement de limiter plus encore les pertes énergétiques de transmission en montant directement un moteur sur un organe propulsif tournant. L'installation de moteurs électriques directement sur les organes propulsifs tournants permet également un montage plus robuste et moins sensible à une rupture mécanique de chaque arbre mécanique.

L'invention a également pour objet un aéronef comprenant un corps principal et un système de propulsion tel que présenté précédemment, le premier organe propulsif tournant et le deuxième organe propulsif tournant, étant montés de part et d'autre dudit corps principal. De manière préférée, l'aéronef comporte un unique système de propulsion.

En outre, l'invention concerne un procédé de fonctionnement d'un système de propulsion tel que décrit précédemment, ledit procédé comprenant :
- une étape d'activation de l'unique générateur de gaz,
- une étape d'entraînement en rotation, via le boîtier de transmission, du premier arbre mécanique et du deuxième arbre mécanique,
- une étape d'entraînement en rotation du premier organe propulsif tournant via le premier arbre mécanique et du deuxième organe propulsif tournant via le deuxième arbre mécanique et
- une étape d'activation de la turbomachine auxiliaire afin qu'elle fournisse un couple d'entraînement supplémentaire.

Un tel procédé permet avantageusement d'assurer le fonctionnement des organes propulsifs tournants en cas de baisse de la puissance du générateur de gaz, permettant d'assurer par exemple le vol de l'avion en cas de dysfonctionnement jusqu'à l'aéroport le plus proche. En effet, l'activation de la turbomachine auxiliaire permet d'assurer le fonctionnement des organes propulsifs tournants en vol. Le système de propulsion est ainsi fiable.

### PRESENTATION DES FIGURES

L'invention sera mieux comprise à la lecture de la description qui va suivre, donnée uniquement à titre d'exemple, et se référant aux dessins annexés sur lesquels :
Fig. 1 est une représentation schématique d'un système de propulsion selon l'art antérieur ;
Fig. 2 est une représentation schématique d'un système de propulsion selon un exemple de réalisation l'invention ;
Fig. 3 représente schématiquement une première forme de réalisation d'un système de propulsion de la figure 2 ;
Fig. 4 représente schématiquement un exemple de positionnement d'une turbomachine auxiliaire du système de propulsion de la figure 2 ;
Fig. 5, Fig. 6 et Fig. 7 représentent plusieurs alternatives d'une deuxième forme de réalisation du système de propulsion selon l'invention comprenant un générateur électrique permettant d'alimenter un ou plusieurs moteur(s) électrique(s), chacune des figures étant une représentation schématique d'un positionnement du ou des moteur(s) électrique(s) ;
Fig. 8 représente une troisième forme de réalisation d'un système de propulsion selon l'invention ; et
Fig. 9 représente un procédé de fonctionnement d'un système de propulsion selon un exemple de mise en oeuvre de l'invention.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE D'UNE FORME DE REALISATION DE L'INVENTION

Comme décrit précédemment, un avion 100 comprend un corps principal 101, connu sous la désignation de « fuselage » délimitant l'habitacle de l'avion 100, et une voilure, comprenant deux ailes (non représentées), s'étendant de part et d'autre du corps principal 101 de l'avion 100, et permettant d'assurer sa portance en vol.

En référence à la figure 2, l'avion 100 s'étend longitudinalement selon un axe X, latéralement selon un axe Y et verticalement selon un axe Z de manière à former un repère orthogonal (X, Y, Z). Dans un tel repère, l'avant et l'arrière sont définis selon l'axe X en référence au déplacement de l'avion 100 en vol. Autrement dit, l'avant et l'arrière de l'avion 100 sont définis selon l'axe X sur la figure 2 qui est orienté de l'arrière vers l'avant. De plus, dans un tel repère, le terme « transversal » désigne un objet s'étendant suivant l'axe latéral Y.

Afin de permettre le déplacement de l'avion 100, celui-ci comprend un système de propulsion 10 configuré pour générer une poussée P dans le sens inverse du déplacement de l'avion 100, de manière à propulser ce dernier vers l'avant. Dans cet exemple, l'avion 100 comprend un unique système de propulsion 10. Selon l'invention, le système de propulsion 10 comprend deux organes propulsifs tournants 1, un unique générateur de gaz 2, un boîtier de transmission 3 et une unique turbomachine auxiliaire 4.

Chaque organe propulsif tournant 1 est configuré pour fournir une poussée comprise entre 1000lbf (4448N) et 7000lbf (31136N) qui est adaptée pour un avion de petites dimensions.

Le système de propulsion 10 comprend un premier organe propulsif tournant 11 et un deuxième organe propulsif tournant 12. Par le terme « organe propulsif tournant », on entend une hélice ou une soufflante ne comprenant pas de générateur de gaz directement associé à l'organe propulsif tournant 1, puisque celui-ci est déporté par rapport aux organes propulsifs tournants 1, comme cela sera décrit plus en détails dans la suite de ce document. Un organe propulsif tournant 1 peut également être désigné par le terme « effecteur propulsif », puisqu'il permet d'assurer la fonction de propulsion de l'avion 100.

Chaque organe propulsif tournant 1 peut être libre ou caréné, c'est-à-dire que ce dernier peut être ou non monté dans un carter de guidage de section annulaire et permettant un meilleur flux aérodynamique. Autrement dit, le système de propulsion 10 selon l'invention est configuré pour être adaptable à la fois à un turboréacteur et à un turbopropulseur, selon les termes définis précédemment. L'organe propulsif tournant 1 peut être associé ou non à un redresseur, peut être associé ou non à une hélice contrarotative et peut être adapté pour tirer « puller » ou pousser « pusher ».

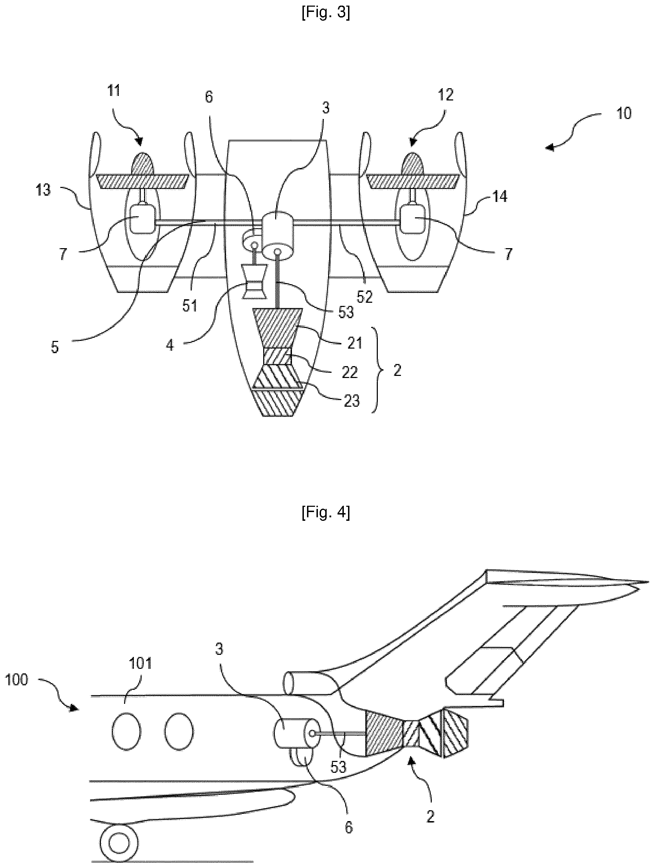

Selon une forme de réalisation préférée, en référence à la figure 3, le premier organe propulsif tournant 11 et le deuxième organe propulsif tournant 12 sont configurés respectivement pour être montés dans un premier carter 13 et dans un deuxième carter 14, permettant avantageusement d'orienter le flux d'air généré par l'organe propulsif tournant 1 et de limiter les perturbations du flux d'air généré par la rotation de chaque organe propulsif tournant 1.

Le premier organe propulsif tournant 11 et le deuxième organe propulsif tournant 12 sont positionnés de part et d'autre du corps principal 101 de l'avion 100. De préférence encore, les organes propulsifs tournants 1 sont positionnés à l'arrière de l'avion 100, à égale distance du corps principal 101, de manière à fournir une poussée P équilibrée de part et d'autre de l'avion 100.

Chaque organe propulsif tournant 1 est caractérisé par un sens de rotation permettant la génération du flux d'air dans le premier carter 13 et dans le deuxième carter 14. Selon deux formes de réalisation alternatives de l'invention, le premier organe propulsif tournant 11 et le deuxième organe propulsif tournant 12 peuvent tourner respectivement suivant un premier sens de rotation et un deuxième de rotation identiques ou opposés.

En effet, dans une première forme de réalisation, les organes propulsifs tournants 1 sont configurés pour tourner selon des sens de rotation identiques, ce qui présente l'avantage de permettre l'installation sur l'avion 100 de deux organes propulsifs tournants 1 similaires, permettant avantageusement la fabrication de soufflantes ou d'hélices présentant des caractéristiques identiques.

Dans une deuxième forme de réalisation, les organes propulsifs tournants 1 sont configurés pour tourner selon des sens de rotation opposés, ce qui présente l'avantage de minimiser l'impact aérodynamique sur l'avion 100 en permettant l'écoulement d'un flux d'air extérieur symétrique sur le corps principal 101 de l'avion 100. Dans une telle configuration, le premier sens de rotation et le deuxième sens de rotation sont configurés pour être choisis, par exemple, de manière à minimiser la distorsion en entrée du premier carter 13 et du deuxième carter 14 ou à réduire le bruit perçu, par exemple par les passagers, depuis l'intérieur de l'avion 100.

Les deux organes propulsifs tournants 1 sont configurés pour ingérer un flux d'air à l'avant de l'avion 100 et pour le rejeter vers l'arrière de l'avion 100, de manière à générer une poussée P. De manière avantageuse, en l'absence de générateur de gaz dans le carter de guidage, chaque organe propulsif tournant 1 permet de déplacer un plus grand volume d'air et de fournir une poussée P plus importante.

Comme représenté sur la figure 3, le système de propulsion 10 comporte un générateur de gaz 2 qui est déporté par rapport aux organes propulsifs tournants 1. De manière connue, le générateur de gaz 2 comprend un compresseur 21, une chambre de combustion 22 et une turbine 23, configurés pour générer une énergie importante permettant la mise en rotation des organes propulsifs tournants 1 à distance. De manière avantageuse, du fait de son déport, le générateur de gaz 2 possède des dimensions réduites et permet de générer un couple d'entraînement important.

Le compresseur 21 est configuré pour comprimer un flux d'air entrant provenant de l'extérieur du générateur de gaz 2. De préférence, le compresseur 21 possède un taux de compression compris entre 10 et 45. La chambre de combustion 22 est configurée pour mélanger le flux d'air comprimé à du carburant afin de dégager une quantité importante d'énergie en sortie de la chambre de combustion 22, permettant l'entraînement de la turbine 23. Cette dernière récupère l'énergie issue de la chambre de combustion 22 afin d'entraîner le compresseur 21 ainsi que le premier organe propulsif tournant 11 et le deuxième organe propulsif tournant 12 via le boîtier de transmission 3, comme cela sera décrit plus en détails dans la suite de ce document. Le compresseur 21 ainsi que la turbine 23 peuvent comprendre un ou plusieurs corps.

Le générateur de gaz 2 est configuré pour être monté, de manière préférée, à l'arrière du corps principal 101 de l'avion 100, permettant de le centrer suivant la largeur de l'avion 100. Un tel positionnement permet au moyen d'un unique générateur de gaz 2 d'entraîner à distance, par l'intermédiaire de liaisons mécaniques, la rotation simultanée des deux organes propulsifs tournants 1 situés de part et d'autre du corps principal 101. De préférence encore, comme représenté sur la figure 4, le générateur de gaz 2 est intégré à l'extrémité arrière de l'avion 100, dans cet exemple sous la dérive de l'avion 100, c'est-à-dire sous l'aileron s'étendant verticalement à la queue de l'avion 100 et assurant sa stabilité. Le générateur de gaz 2 n'entraîne ainsi avantageusement aucune perte aérodynamique en vol.

L'intégration d'un unique générateur de gaz 2 positionné à l'arrière du corps principal 101 de l'avion 100 permet avantageusement l'installation d'un générateur de gaz 2 présentant des dimensions plus importantes étant donné qu'il n'est pas en prise directe avec un organe propulsif tournant 1. Le générateur de gaz 2 est ainsi configuré pour produire une quantité plus importante d'énergie pour un encombrement analogue à l'art antérieur.

Afin de permettre la poussée de l'avion 100, en référence à la figure 3, le générateur de gaz 2 est relié mécaniquement à chacun des deux organes propulsifs tournants 1 par l'intermédiaire d'arbres mécaniques 51, 52, 53 et du boîtier de transmission 3.

Le boîtier de transmission 3 est relié au premier organe propulsif tournant 11 via un premier arbre mécanique 51, au deuxième organe propulsif tournant 12 via un deuxième arbre mécanique 52 et au générateur de gaz 2 via un troisième arbre mécanique 53.

Un tel boîtier de transmission 3 est configuré pour transmettre un couple d'entraînement reçu du générateur de gaz 2, au premier arbre mécanique 51 et au deuxième arbre mécanique 52.

Le premier arbre mécanique 51 et le deuxième arbre mécanique 52 se présentent dans cet exemple sous la forme de deux arbres de transmission indépendants s'étendant suivant la largeur de l'avion 100 et configurés pour permettre la transmission d'un mouvement de rotation. Aussi, l'énergie récupérée par la turbine 23 permet, via le premier arbre mécanique 51 et le deuxième arbre mécanique 52, la mise en rotation respective du premier organe propulsif tournant 11 et du deuxième organe propulsif tournant 12. De manière alternative, les deux arbres mécaniques sont solidaires et forment un unique arbre mécanique 5 relié à la fois au premier organe propulsif tournant 11 et au deuxième organe propulsif tournant 12. En référence à la figure 3, le troisième arbre mécanique 53 s'étend suivant la longueur de l'avion 100.

Le boîtier de transmission 3 comprend, dans cet exemple, une pluralité d'engrenages, configurés pour transformer le mouvement de rotation du troisième arbre mécanique 53 s'étendant suivant la longueur de l'avion 100 en un mouvement de rotation du premier arbre mécanique 51 et du deuxième arbre mécanique 52, s'étendant transversalement dans l'avion 100. Le boîtier de transmission 3 permet en outre de régler les rapports de vitesse. Le boîtier de transmission 3 est de préférence configuré pour entraîner en rotation les organes propulsifs tournants 1 à une même vitesse afin de fournir des poussées symétriques.

Comme illustré à la figure 3, le premier arbre mécanique 51 et le deuxième arbre mécanique 52 sont respectivement reliés aux organes propulsifs tournants 1 par l'intermédiaire de boîtiers de transfert 7. De tels boîtiers de transfert 7 permettent un entraînement optimal des organes propulsifs tournants 1 selon des axes parallèles à l'axe longitudinal X.

La dissociation des organes propulsifs tournants 1 et du générateur de gaz 2 permet l'installation d'un générateur de gaz 2 unique pouvant être installé en une position différente et éloignée des organes propulsifs tournants 1 sur le corps principal 101 de l'avion 100. Aussi, afin de réduire son impact aérodynamique, le générateur de gaz 2 peut présenter des dimensions plus importantes et donc une puissance plus importante. La dissociation du générateur de gaz 2 permet avantageusement son installation sur des avions présentant des faibles dimensions.

La turbomachine auxiliaire 4, se présentant dans cet exemple sous la forme d'un APU, signifiant « Auxiliary Power Unit » en langue anglaise, et définissant un groupe auxiliaire de puissance, généralement installé sur un avion et permettant le fonctionnement par exemple des éclairages et de la climatisation lorsque l'avion est stationné et que les turbomoteurs sont éteints.

De préférence, la turbomachine auxiliaire 4 est positionnée dans l'empennage de l'avion. De préférence encore, la turbomachine auxiliaire 4 est configurée pour produire de l'énergie électrique à bord de l'avion pour alimenter au sol les différents systèmes de bord dudit avion.

Selon l'invention, la turbomachine auxiliaire 4 est configurée pour suppléer le générateur de gaz 2 en cas de dysfonctionnement ou lorsque l'avion 100 nécessite une poussée P plus importante. Pour cela, la turbomachine auxiliaire 4 est configurée pour fournir une poussé P représentant entre 5 et 20% de la capacité de poussée générée par les organes propulsifs tournants 1 qui est comprise entre 2*1000lbf (2*4448N) et 2*7000lbf (2*31136N). Une telle puissance permet à l'avion 100 en cas de dysfonctionnement du générateur de gaz 2 de pouvoir voler par exemple jusqu'à un aéroport, pour assurer un atterrissage en toute sécurité.

De manière préférée, la turbomachine auxiliaire 4 est configurée pour fournir de la poussée pour participer à la propulsion de l'aéronef (poussée utile).Selon une première forme de réalisation de l'invention, en référence à la figure 3, la turbomachine auxiliaire 4 est configurée pour être reliée mécaniquement au boîtier de transmission 3, par exemple, par l'intermédiaire d'un module d'embrayage 6. Un tel module d'embrayage 6 permet avantageusement de connecter et/ou déconnecter la turbomachine auxiliaire 4 du boîtier de transmission 3 en fonction des besoins.

Dans cette forme de réalisation, le boîtier de transmission 3 est ainsi configuré pour permettre à la turbomachine auxiliaire 4 d'entraîner les organes propulsifs tournants 1 via le boîtier de transmission 3. En effet, le module d'embrayage 6 est configuré pour permettre le basculement entre le générateur de gaz 2 et la turbomachine auxiliaire 4 suivant les besoins, par exemple suivant si l'un ou l'autre est en fonctionnement. Autrement dit, le module d'embrayage 6 permet au boîtier de transmission 3 d'être commandé soit par le générateur de gaz 2, soit par la turbomachine auxiliaire 4, soit par la combinaison du générateur de gaz 2 et de la turbomachine auxiliaire 4, de manière à permettre en toute circonstance la rotation des organes propulsifs tournants 1. Selon un exemple de réalisation, un tel module d'embrayage 6 est commandé par le pilote de l'avion 100 par l'intermédiaire d'un bouton de commande de type commutateur, par exemple intégré dans le cockpit de l'avion 100.

De manière préférée, le module d'embrayage 6 est de type différentiel ou se présente sous la forme d'un système d'embrayage, par exemple de type roue libre, de manière, avantageusement, à éviter l'entraînement mutuel du générateur de gaz 2 et de la turbomachine auxiliaire 4 qui sont alors connectés.

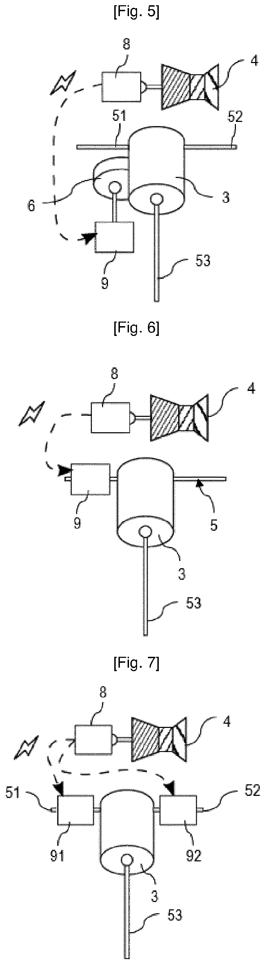

Selon une deuxième forme de réalisation de l'invention, représentée sur les figures 5 à 7, la turbomachine auxiliaire 4 fournit un couple d'entraînement de manière indirecte. A cet effet, le système de propulsion 10 comprend un générateur électrique 8 configuré pour alimenter un ou plusieurs moteur(s) électrique(s) 9 permettant d'entraîner en rotation les organes propulsifs tournants 1. Le générateur électrique 8 est entraîné directement par la turbomachine auxiliaire 4 et le générateur électrique 8 est relié électriquement à un ou plusieurs moteur(s) électrique(s) 9. L'utilisation de moteurs électriques 9 permet avantageusement de limiter la dissipation d'énergie dans les différents modules mécaniques. Pour cela, le ou les moteur(s) électrique(s) 9 alimenté(s) (peuvent) être monté(s) suivant différentes configurations.

Selon une première configuration représentée sur la figure 5, un unique moteur électrique 9 est monté sur le boîtier de transmission 3, de préférence via un module d'embrayage 6, pour fournir un couple d'entrée. Une telle configuration permet avantageusement de déporter la turbomachine auxiliaire 4 pour des raisons d'encombrement ou si cette dernière possède une capacité limitée.

Selon une deuxième configuration représentée sur la figure 6, le système de propulsion 10 comprend un unique arbre mécanique 5 s'étendant entre le premier organe propulsif tournant 11 et le deuxième organe propulsif tournant 12. Autrement dit, le premier arbre mécanique 51 et le deuxième arbre mécanique 52 sont solidaires. Un unique moteur électrique 9 est monté sur l'unique arbre mécanique 5 afin de l'entraîner. Ainsi, le boîtier de transmission 3 ne reçoit pas de couple d'entrée du moteur électrique 9, ce qui permet de simplifier la structure du boîtier de transmission 3. L'unique moteur électrique 9 est monté entre le boîtier de transmission 3 et l'un des boîtiers de transfert 7 décrits précédemment. Un tel positionnement du moteur électrique 9 permet avantageusement de réduire les pertes de puissance tout en permettant l'entraînement à la fois du premier organe propulsif tournant 11 et du deuxième organe propulsif tournant 12 par un unique moteur électrique 9.

Selon une troisième configuration représentée sur la figure 7, le premier arbre mécanique 51 et le deuxième arbre mécanique 52 sont indépendants l'un de l'autre. Un moteur électrique est monté sur chaque arbre mécanique afin de l'entraîner de manière indépendante. Autrement dit, un premier moteur électrique 91 est monté sur le premier arbre mécanique 51 entre le boîtier de transfert 7 du premier organe propulsif tournant 11 et le boîtier de transmission 3 et un deuxième moteur électrique 92 est monté sur le deuxième arbre mécanique 52 entre le boîtier de transfert 7 du deuxième organe propulsif tournant 12 et le boîtier de transmission 3. Un tel montage permet avantageusement de limiter les pertes de puissance dues au passage dans le boîtier de transmission 3 lorsque le système de propulsion 10 comprend un premier arbre mécanique 51 et un deuxième arbre mécanique 52. En outre, cela permet d'utiliser des moteurs électriques 91, 92 de plus faible puissance.

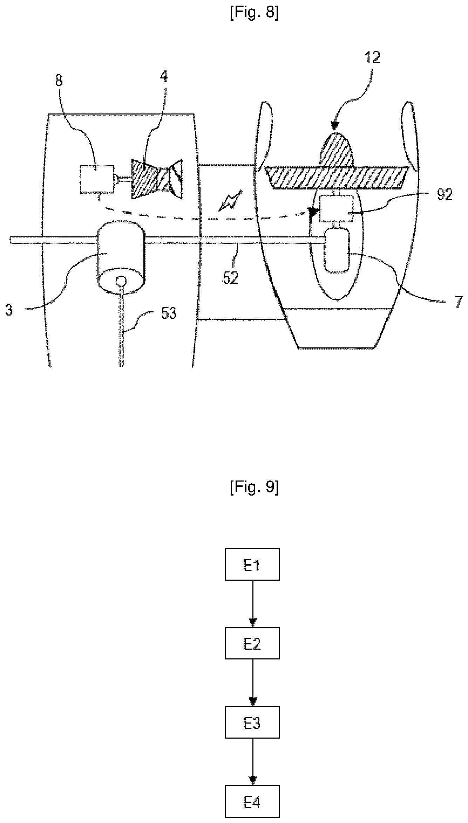

Selon une troisième forme de réalisation de l'invention représentée sur la figure 8, deux moteurs électriques 91, 92 sont reliés directement à chacune des deux organes propulsifs tournants 1, chaque moteur électrique 91, 92 étant configuré pour entraîner directement l'organe propulsif tournant 11, 12 auquel il est relié en prise directe. Une telle configuration permet avantageusement de limiter plus encore les pertes énergétiques de transmission entre un moteur électrique 9 et un organe propulsif tournant 1.

De manière optionnelle, le générateur électrique 8 est relié électriquement à un ou plusieurs moteur(s) électrique(s) 9 via une batterie électrique de stockage. Ainsi, un moteur électrique 9 peut fonctionner sans que la turbomachine auxiliaire 4 ou que le générateur de gaz 2 ne soit en fonctionnement, par exemple pendant les opérations de roulage au sol, ce qui réduit les émissions polluantes.

De manière avantageuse, la turbomachine auxiliaire 4 est configurée pour être activée lorsque le générateur de gaz 2 est simplement éteint, c'est-à-dire pas uniquement en cas de dysfonctionnement. En effet, la turbomachine auxiliaire 4 présente également l'avantage d'être configurée pour pouvoir être utilisée seule par exemple lors du déplacement au sol de l'avion 100, phase durant laquelle l'avion 100 ne nécessite pas une poussée importante. Une telle utilisation permet avantageusement de limiter la consommation en carburant tout en limitant les émissions polluantes. L'utilisation de moteurs électriques 9 permet en outre de réduire les nuisances sonores.

Aussi, dans le système de propulsion 10 selon l'invention, le générateur de gaz 2 et la turbomachine auxiliaire 4 peuvent selon les besoins être utilisés ensemble ou indépendamment l'un de l'autre. En effet, ces derniers présentent l'avantage d'être totalement distincts. Un tel système de propulsion 10 présente en outre l'avantage de pouvoir être installé sur des avions présentant de faibles dimensions, tout en assurant une poussée P assez importante pour permettre le déplacement de l'avion 100 dans des conditions optimales.

Il va dorénavant être décrit un procédé de fonctionnement du système de propulsion 10, en référence à la figure 9, selon un mode de mise en oeuvre préféré de l'invention.

L'exemple décrit ici présente le fonctionnement d'un système de propulsion 10 selon la première forme de réalisation de l'invention, représentée à la figure 3 et dans laquelle la turbomachine auxiliaire 4 est reliée directement au boîtier de transmission 3 par l'intermédiaire d'un module d'embrayage 6.

Le procédé comprend tout d'abord une étape d'activation E1 de l'unique générateur de gaz 2, par exemple par l'intermédiaire d'une commande activée par le pilote de l'avion 100. L'énergie générée par le générateur de gaz 2 permet la mise en rotation du troisième arbre mécanique 53 qui entraîne alors en rotation, dans une étape E2, le premier arbre mécanique 51 et le deuxième arbre mécanique 52 via le boîtier de transmission 3.

Le procédé comporte une étape d'entraînement en rotation E3 du premier organe propulsif tournant 11 via le premier arbre mécanique 51 et du deuxième organe propulsif tournant 12 via le deuxième arbre mécanique 52.

Selon un premier mode de mise en oeuvre, lorsque la puissance générée par le générateur de gaz 2 est inférieure à une puissance prédéterminée, le procédé comprend une étape d'activation E4 de la turbomachine auxiliaire 4 afin qu'elle fournisse un couple d'entraînement supplémentaire. En référence à la figure 3, la turbomachine auxiliaire 4 est reliée au boîtier de transmission 3 par une liaison mécanique directe. Cela permet avantageusement de fournir un couple de sortie supplémentaire aux arbres mécaniques 51, 52 pour entraîner respectivement en rotation le premier organe propulsif tournant 11 et le deuxième organe propulsif tournant 12.

Dans d'autres modes de mise en oeuvre alternatifs illustrés aux figures 5 à 8, la turbomachine auxiliaire 4 entraîne le générateur électrique 8 qui alimente électriquement un ou plusieurs moteurs électriques 9. En référence à la figure 5, le moteur électrique 9 fournit un couple d'entraînement supplémentaire au boîtier de transmission 3 par liaison mécanique directe (figure 5). Cela permet avantageusement de fournir un couple de sortie supplémentaire aux arbres mécaniques 51, 52 pour entraîner respectivement en rotation le premier organe propulsif tournant 11 et le deuxième organe propulsif tournant 12.

En référence aux figures 6 et 7, le ou les moteurs électriques 9 fournissent un couple d'entraînement supplémentaire en aval du boîtier de transmission 3, en particulier, sur les arbres mécaniques 51, 52 solidaires (figure 6) ou indépendants (figure 7).

En référence à la figure 8, le ou les moteurs électriques 9 fournissent un couple d'entraînement supplémentaire en aval des boîtiers de transfert 7 et sont reliés respectivement au premier organe propulsif tournant 11 et au deuxième organe propulsif tournant 12 en prise directe.

Le procédé de fonctionnement du système de propulsion 10 permet avantageusement d'utiliser la turbomachine auxiliaire 4 en remplacement ou en complément d'un générateur de gaz 2 par exemple si ce dernier présente un dysfonctionnement, des capacités réduites ou si l'avion 100 nécessite une poussée P plus importante. De plus, l'utilisation de moteurs électriques et d'une batterie électrique permet d'entraîner les organes propulsifs tournants en rotation sans que la turbomachine auxiliaire ou que le générateur de gaz soit en fonctionnement, par exemple pendant les opérations de roulage au sol. Un tel procédé permet en outre de limiter les émissions polluantes ainsi que les nuisances sonores.

## Revendications

1. Système de propulsion (10) destiné à être monté sur un aéronef comprenant un corps principal (101), ledit système de propulsion (10) comprenant :
- un premier organe propulsif tournant (11) et un deuxième organe propulsif tournant (12), destinés à être montés de part et d'autre dudit corps principal (101),
- un boîtier de transmission (3), relié au premier organe propulsif tournant (11) via un premier arbre mécanique (51) et au deuxième organe propulsif tournant (12) via un deuxième arbre mécanique (52),
- un unique générateur de gaz (2) comprenant un compresseur (21), une chambre de combustion (22) et une turbine (23), le générateur de gaz (2) étant relié audit boîtier de transmission (3) afin d'entraîner le premier organe propulsif tournant (11) et le deuxième organe propulsif tournant (12) en rotation, **caractérisé en ce que** le système comprend
- une unique turbomachine auxiliaire (4), configurée pour entraîner le premier organe propulsif tournant (11) et le deuxième organe propulsif tournant (12) en rotation indépendamment du générateur de gaz (2).

2. Système de propulsion (10) selon la revendication 1, dans lequel chaque organe propulsif tournant (11, 12) est configuré pour fournir une poussée comprise entre 1000lbf (4448N) et 8000lbf (35584N), de préférence, comprise entre 1000lbf (4448N) et 7000lbf (31136N).

3. Système de propulsion (10) selon l'une des revendications 1 et 2, comprenant un module d'embrayage (6) configuré pour relier mécaniquement la turbomachine auxiliaire (4) au boîtier de transmission (3).

4. Système de propulsion (10) selon l'une des revendications 1 à 3, comprenant au moins un générateur électrique (8), relié à la turbomachine auxiliaire (4), et au moins un moteur électrique (9), alimenté par le générateur électrique (8) et configuré pour entraîner le premier organe propulsif tournant (11) et le deuxième organe propulsif tournant (12) en rotation.

5. Système de propulsion (10) selon la revendication 4, dans lequel le moteur électrique (9) est relié directement au boîtier de transmission (3) pour l'entraîner directement.

6. Système de propulsion (10) selon la revendication 4, dans lequel, le premier arbre mécanique (51) et le deuxième arbre mécanique (52) formant un unique arbre mécanique (5), ledit moteur électrique (9) est relié directement audit unique arbre mécanique (5) pour l'entraîner directement.

7. Système de propulsion (10) selon la revendication 4, dans lequel, le premier arbre mécanique (51) et le deuxième arbre mécanique (52) étant indépendants, le système de propulsion (10) comprend un premier moteur électrique (91), monté sur le premier arbre mécanique (51) pour l'entraîner directement, et un deuxième moteur électrique (92), monté sur le deuxième arbre mécanique (52) pour l'entraîner directement.

8. Système de propulsion (10) selon la revendication 4, dans lequel, le système de propulsion (10) comprend un premier moteur électrique (91) monté directement sur le premier organe propulsif tournant (11) pour l'entraîner directement et un deuxième moteur électrique (92) monté directement sur le deuxième organe propulsif tournant (12) pour l'entraîner directement.

9. Système de propulsion (10) selon l'une des revendications 1 à 8, dans lequel le premier organe propulsif tournant (11) étant **caractérisé par** un premier sens de rotation et le deuxième organe propulsif tournant (12) étant **caractérisé par** un deuxième sens de rotation, le premier organe propulsif tournant (11) et le deuxième organe propulsif tournant (12) sont configurés pour tourner suivant des sens de rotation identiques.

10. Système de propulsion (10) selon l'une des revendications 1 à 8, dans lequel le premier organe propulsif tournant (11) étant **caractérisé par** un premier sens de rotation et le deuxième organe propulsif tournant (12) étant **caractérisé par** un deuxième sens de rotation, le premier organe propulsif tournant (11) et le deuxième organe propulsif tournant (12) sont configurés pour tourner suivant des sens de rotation opposés.

11. Système de propulsion (10) selon l'une des revendications 4 à 10, comprenant une batterie de stockage électrique configurée pour être alimentée par le générateur électrique (8) afin de permettre d'alimenter le moteur électrique (9) sans que la turbomachine auxiliaire (4) ou que le générateur de gaz (2) soit en fonctionnement.

12. Aéronef comprenant un corps principal (101) et un système de propulsion (10) selon l'une des revendications 1 à 11, le premier organe propulsif tournant (11) et le deuxième organe propulsif tournant (12), étant montés de part et d'autre dudit corps principal (101).

13. Procédé de fonctionnement d'un système de propulsion (10) selon l'une des revendications 1 à 11, ledit procédé comprenant :
- une étape d'activation (E1) de l'unique générateur de gaz (2),
- une étape d'entraînement en rotation (E2), via le boîtier de transmission (3), du premier arbre mécanique (51) et du deuxième arbre mécanique (52),
- une étape d'entraînement en rotation (E3) du premier organe propulsif tournant (11) via le premier arbre mécanique (51) et du deuxième organe propulsif tournant (12) via le deuxième arbre mécanique (52) et **caractérisé en ce que** le procédé comprend
- une étape d'activation (E4) de la turbomachine auxiliaire (4) afin qu'elle fournisse un couple d'entraînement supplémentaire.

## Patentansprüche

1. Antriebssystem (10), das zur Anbringung an einem Luftfahrzeug bestimmt ist, wobei das Luftfahrzeug einen Hauptkörper (101) umfasst, wobei das Antriebssystem (10) umfasst:
- ein erstes drehendes Antriebsorgan (11) und ein zweites drehendes Antriebsorgan (12), die zur Anbringung beidseits des Hauptkörpers (101) bestimmt sind,
- ein Getriebegehäuse (3), das mit dem ersten drehenden Antriebsorgan (11) über eine erste mechanische Welle (51) und mit dem zweiten drehenden Antriebsorgan (12) über eine zweite mechanische Welle (52) verbunden ist,
- einen einzigen Gaserzeuger (2), der einen Kompressor (21), eine Brennkammer (22) und eine Turbine (23) umfasst, wobei der Gaserzeuger (2) mit dem Getriebegehäuse (3) verbunden ist, um das erste drehende Antriebsorgan (11) und das zweite drehende Antriebsorgan (12) rotatorisch anzutreiben,
**dadurch gekennzeichnet, dass** das System umfasst
- eine einzige Hilfs-Turbomaschine (4), die dazu ausgelegt ist, das erste drehende Antriebsorgan (11) und das zweite drehende Antriebsorgan (12) unabhängig vom Gaserzeuger (2) rotatorisch anzutreiben.

2. Antriebssystem (10) nach Anspruch 1, wobei jedes drehende Antriebsorgan (11, 12) dazu ausgelegt ist, einen Schub bereitzustellen, der zwischen 1000 Ibf (4448 N) und 8000 Ibf (35584 N) liegt, vorzugsweise zwischen 1000 Ibf (4448 N) und 7000 lbf (31136 N) liegt.

3. Antriebssystem (10) nach einem der Ansprüche 1 und 2, umfassend ein Kupplungsmodul (6), das dazu ausgelegt ist, die Hilfs-Turbomaschine (4) mit dem Getriebegehäuse (3) mechanisch zu verbinden.

4. Antriebssystem (10) nach einem der Ansprüche 1 bis 3, umfassend mindestens einen Stromgenerator (8), der mit der Hilfs-Turbomaschine (4) verbunden ist, und mindestens einen Elektromotor (9), der von dem Stromgenerator (8) versorgt wird und dazu ausgelegt ist, das erste drehende Antriebsorgan (11) und das zweite drehende Antriebsorgan (12) rotatorisch anzutreiben.

5. Antriebssystem (10) nach Anspruch 4, wobei der Elektromotor (9) direkt mit dem Getriebegehäuse (3) verbunden ist, um es direkt anzutreiben.

6. Antriebssystem (10) nach Anspruch 4, wobei, wobei die erste mechanische Welle (51) und die zweite mechanische Welle (52) eine einzige mechanische Welle (5) bilden, der Elektromotor (9) direkt mit der einzigen mechanischen Welle (5) verbunden ist, um sie direkt anzutreiben.

7. Antriebssystem (10) nach Anspruch 4, wobei, wobei die erste mechanische Welle (51) und die zweite mechanische Welle (52) unabhängig sind, das Antriebssystem (10) einen ersten Elektromotor (91) umfasst, der auf der ersten mechanischen Welle (51) angebracht ist, um sie direkt anzutreiben, und einen zweiten Elektromotor (92), der auf der zweiten mechanischen Welle (52) angebracht ist, um sie direkt anzutreiben.

8. Antriebssystem (10) nach Anspruch 4, wobei das Antriebssystem (10) einen ersten Elektromotor (91) umfasst, der direkt auf dem ersten drehenden Antriebsorgan (11) angebracht ist, um es direkt anzutreiben, und einen zweiten Elektromotor (92), der direkt auf dem zweiten drehenden Antriebsorgan (12) angebracht ist, um es direkt anzutreiben.

9. Antriebssystem (10) nach einem der Ansprüche 1 bis 8, wobei das erste drehende Antriebsorgan (11) durch eine erste Rotationsrichtung gekennzeichnet ist und das zweite drehende Antriebsorgan (12) durch eine zweite Rotationsrichtung gekennzeichnet ist, wobei das erste drehende Antriebsorgan (11) und das zweite drehende Antriebsorgan (12) dazu ausgelegt sind, gemäß identischen Rotationsrichtung zu drehen.

10. Antriebssystem (10) nach einem der Ansprüche 1 bis 8, wobei das erste drehende Antriebsorgan (11) durch eine erste Rotationsrichtung gekennzeichnet ist und das zweite drehendes Antriebsorgan (12) durch eine zweite Rotationsrichtung gekennzeichnet ist, wobei das erste drehende Antriebsorgan (11) und das zweite drehende Antriebsorgan (12) dazu ausgelegt sind, gemäß entgegengesetzten Rotationsrichtungen zu drehen.

11. Antriebssystem (10) nach einem der Ansprüche 4 bis 10, das eine Stromspeicherbatterie umfasst, die dazu ausgelegt ist, von dem Stromgenerator (8) versorgt zu werden, um zu erlauben, den Elektromotor (9) zu versorgen, ohne dass die Hilfs-Turbomaschine (4) oder dass der Gaserzeuger (2) im Betrieb ist.

12. Luftfahrzeug, umfassend einen Hauptkörper (101) und ein Antriebssystem (10) nach einem der Ansprüche 1 bis 11, wobei das erste drehende Antriebsorgan (11) und das zweite drehende Antriebsorgan (12) beidseits des Hauptkörpers (101) angebracht sind.

13. Verfahren zum Betreiben eines Antriebssystems (10) nach einem der Ansprüche 1 bis 11, wobei das Verfahren umfasst:
- einen Schritt des Aktivierens (E1) des einzigen Gaserzeugers (2),
- einen Schritt des rotierenden Antreibens (E2) der ersten mechanischen Welle (51) und der zweiten mechanischen Welle (52) über das Getriebegehäuse (3),
- einen Schritt des rotierenden Antreibens (E3) des ersten drehenden Antriebsorgans (11) über die erste mechanische Welle (51) und des zweiten drehenden Antriebsorgans (12) über die zweite mechanische Welle (52), und
**dadurch gekennzeichnet, dass** das Verfahren umfasst
- einen Schritt des Aktivierens (E4) der Hilfs-Turbomaschine (4), damit sie ein zusätzliches Antriebsdrehmoment bereitstellt.

## Claims

1. A propulsion system (10) for being mounted on an aircraft comprising a main body (101), said propulsion system (10) comprising:
- a first rotating propulsive member (11) and a second rotating propulsive member (12), for being mounted on either side of said main body (101),
- a transmission box (3), connected to the first rotating propulsive member (11) via a first mechanical shaft (51) and to the second rotating propulsive member (12) via a second mechanical shaft (52),
- a single gas generator (2) comprising a compressor (21), a combustion chamber (22) and a turbine (23), the gas generator (2) being connected to said transmission box (3) in order to rotatably drive the first rotating propulsive member (11) and the second rotating propulsive member (12), **characterized in that** the system comprises
- a single auxiliary turbomachine (4), configured to rotatably drive the first rotating propulsive member (11) and the second rotating propulsive member (12) independently of the gas generator (2).

2. The propulsion system (10) according to claim 1, wherein each rotating propulsive member (11, 12) is configured to provide a thrust between 1000lbf (4448N) and 8000lbf (35584N), preferably between 1000lbf (4448N) and 7000lbf (31136N).

3. The propulsion system (10) according to one of claims 1 and 2, comprising a clutch module (6) configured to mechanically connect the auxiliary turbomachine (4) to the transmission box (3).

4. The propulsion system (10) according to one of claims 1 to 3, comprising at least one electric generator (8), connected to the auxiliary turbomachine (4), and at least one electric motor (9), powered by the electric generator (8) and configured to rotatably drive the first rotating propulsive member (11) and the second rotating propulsive member (12).

5. The propulsion system (10) according to claim 4, wherein the electric motor (9) is directly connected to the transmission box (3) to drive it directly.

6. The propulsion system (10) according to claim 4, wherein, the first mechanical shaft (51) and the second mechanical shaft (52) forming a single mechanical shaft (5), said electric motor (9) is directly connected to said single mechanical shaft (5) to drive it directly.

7. The propulsion system (10) according to claim 4, wherein, the first mechanical shaft (51) and the second mechanical shaft (52) being independent, the propulsion system (10) comprises a first electric motor (91), mounted on the first mechanical shaft (51) to drive it directly, and a second electric motor (92), mounted on the second mechanical shaft (52) to drive it directly.

8. The propulsion system (10) according to claim 4, wherein, the propulsion system (10) comprises a first electric motor (91) mounted directly on the first rotating propulsive member (11) to drive it directly and a second electric motor (92) mounted directly on the second rotating propulsive member (12) to drive it directly.

9. The propulsion system (10) according to one of claims 1 to 8, wherein the first rotatable propulsive member (11) is **characterized by** a first direction of rotation and the second rotatable propulsive member (12) is **characterized by** a second direction of rotation, the first rotatable propulsive member (11) and the second rotatable propulsive member (12) are configured to rotate in identical directions of rotation.

10. The propulsion system (10) according to one of claims 1 to 8, wherein the first rotating propulsive member (11) being **characterized by** a first direction of rotation and the second rotating propulsive member (12) being **characterized by** a second direction of rotation, the first rotating propulsive member (11) and the second rotating propulsive member (12) are configured to rotate in opposite directions of rotation.

11. The propulsion system (10) according to one of claims 4 to 10, comprising an electrical storage battery configured to be powered by the electrical generator (8) to allow power to be supplied to the electric motor (9) without the auxiliary turbomachinery (4) or gas generator (2) being in operation.

12. An aircraft comprising a main body (101) and a propulsion system (10) according to one of claims 1 to 11, the first rotating propulsive member (11) and the second rotating propulsive member (12) being mounted on either side of said main body (101).

13. A method for operating a propulsion system (10) according to one of claims 1 to 11, said method comprising:
- a step of activating (E1) the single gas generator (2),
- a step of rotatably driving (E2), via the transmission box (3), the first mechanical shaft (51) and the second mechanical shaft (52),
- a step of rotatably driving (E3) the first rotating propulsive member (11) via the first mechanical shaft (51), and the second rotating propulsive member (12) via the second mechanical shaft (52), and **characterized in that** the system comprises
- a step of activating (E4) the auxiliary turbomachinery (4) so that it provides a additional drive torque.
